# EUROPEAN PATENT SPECIFICATION

(11) **EP 0 635 464 B1**
(45) Date of publication and mention of the grant of the patent: **28.10.1998**
(21) Application number: 93500111.5
(22) Date of filing: 21.07.1993
(51) Int. Cl.: C04B 33/04

(54) **A raw material composition for ceramic materials and process for its preparation**
Rohstoffzusammensetzung für keramische Werkstoffe und Verfahren zu seiner Herstellung
Composition de matière première pour matériaux céramiques et procédé pour sa préparation

(43) Date of publication of application: 25.01.1995
(73) Proprietor: KAO CORPORATION, S.A., 08210 Barbera del Valles, (Barcelona) (ES)
(72) Inventor: Esteban, Rafael, E-08027 Barcelona (ES); Okabe, Kazuhiko, E-08021 Barcelona (ES); Pujadas, Francisco, E-08021 Barcelona (ES); Sapés, Emilio, E-08184 Palau de Plegamans (Barcelona) (ES)
(74) Representative: Kindler, Matthias, Dr. Dipl.-Chem.

(56) References cited:
- EP-A- 0 131 785
- FR-A- 2 550 781
- US-A- 4 812 427
- US-A- 4 854 971
- DATABASE WPI Week 8417, Derwent Publications Ltd., London, GB; AN 84-103802 & JP-A-59 045 961 (MITSUI)

## Description

### Field of the invention

This invention relates to a chemical component for pavement and wall tile ceramics manufactured through mono or bi-cooking processes.

### Background of the invention

Ceramic tile manufacture has several steps as follows:

### 1).- Grinding process.

Mixture and homogenization of several kinds of raw materials (see standard composition described below). The main objective in this step is reducing the size of solid particles in order to increase the surface.

### 2).- Milling process & slurry preparation.

Clay, water, and chemical additives are charged to the ball mill. After a milling time from 2 h. to 8 h., preferably 3 - 4 h., a slurry is obtained with a range of clay content from 62% to 72%, generally from 65% to 66%. The slurry has to be fluid. So, its viscosity should be lower than 2000 cps, preferably lower than 1000 cps. The function of chemical additives added previously is reaching the correct viscosity level of the slurry. These additives present a high dispersion ability, generally are inorganic compounds like sodium tripolyphosphate, sodium metasilicate, etc.

After milling, the slurry is discharged into a vessel with mechanical agitation, that avoid particle sedimentation and maintain the homogeneity of the slurry.

### 3).- Atomization.

From the vessel, the slurry passes through a sieve and it is pumped to the atomizer, where is pulverized. It dries upon contacting hot air with a temperature between 500°C and 600°C. A powder product is obtained with a moisture level, from 4% to 7% content of water, and an average particle size, from 150µ to 600µ. This level of moisture is necessary in order to avoid problems in the press moulding step. The particle size has a direct relationship with the compactation and the mechanical resistence of the green and cooked tiles.

### 4).- Press moulding & drying process.

Pressing is the simultaneous compaction and shaping of a powder product confined within a rigid die. The standard process uses an hidraulic press. The pressure range goes from 150 kg/cm2 to 300 kg/cm2, preferably 210 - 270 kg/cm2. The green body is obtained at the end of this step. Then it is dried during a fast drying process, where liquid is removed from pores of the green body. At this time, the faces of the tile are in contact with hot air (120°C - 200°C) during a short period of time (35 - 55 min.). As a consequence of the drying process the level of moisture of the ceramic tile is lower than 1.5%.

### 5).- Enamel & serigraph process.

During this step decorative coatings are applied on the surface of the green ceramic tiles. The green body (dried) goes through several devices where upper surface is enameled and serigraphied. After ward the ceramic tiles are stored in an appropriate place before the cooking step.

### 6).- Cooking.

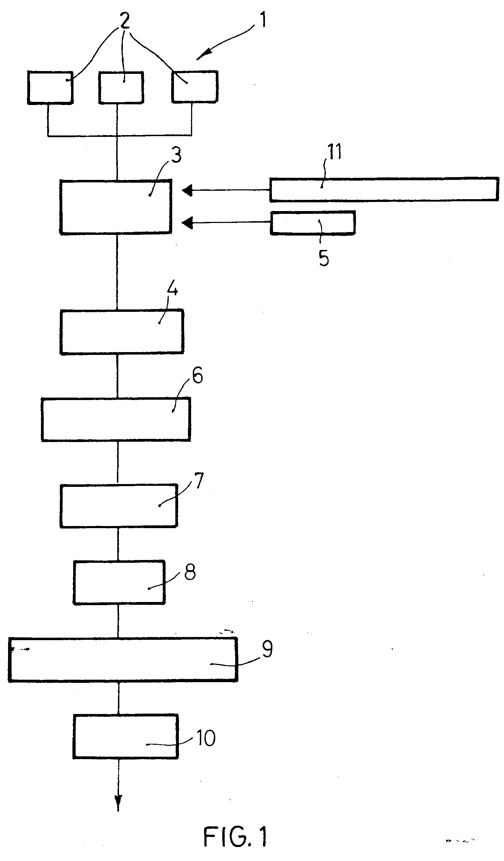

The ceramic tiles that have been dried and surface-finished are heat-treated in a furnace with a fast monocooking cicle. The ccoking time range goes from 35 min to 60 min, generally 45 - 50 min. During this period of time temperature reaches a maximum around 1050° - 1200° C. The cooking or firing process, may be considered to proceed in three stages: (1) Heating, where reactions preliminary to sintering, which include binder burnout and the elimination of gaseous products of decomposition and oxidation take place. (2) Sintering. (3) Cooling. Final ceramic tile is obtained at the end of this process.See figure 1 for global flow production.

The actual technology has some weak points, mainly at the slurry and atomization steps. The negative points are: use of a high amount of dispersant, long milling time, low solid content of the slurry; as a consequence it uses a high amount of energy at the atomization step. Our invention presents several technical advantages: lower dosage of dispersant, reduction of milling time, higher content of clay in the slurry, energy saving at the atomization step, and higher mechanical resistence of ceramic tiles.

EP-A-0 131 785 reveals a fluid aqueous suspension of crude kaolinitic clay mineral, said suspension having a solids content of at least about 65% by weight and an acid pH in the range of about 5.5 to 7.0, said suspension containing a dispersing agent comprising from about 20% to about 50% by weight of a water soluble carbonate, from about 20% to about 50% by weight of a water soluble organic polyacrylate, and from 0% to about 60% by weight of a water soluble anionic phosphate. This suspension is prepared to a clay filler composition for use in paper-making to enhance brightness.

US-A-4 812 427 discloses a ball clay/water slurry comprising from 58 to 68 wt.% of ball clay; from 42 to 32 wt.% of water; from 0.01 to 1.0 wt.% of an organic polyelectrolyte having a molecular weight of from 1400 to about 6000, preferably a polyacrylate; and 50 to 600 ppm of a soluble sulfate. This aqueous slurry can be spray-dried or formed into a porcelain slip. The slurry shows an increasing gel viscosity and is slip-casted in such a way that the slip is dewatered in a plaster mold and the dewatering is accompanied by a simultaneous gelation of the colloidal fraction of the particles within the body.

### Summary of the invention

This invention describes an aqueous slurry composition for ceramics, a method for producing raw material for ceramics, a green body for ceramics and ceramic tiles as defined in claims 1 to 11. The aqueous slurry composition includes a chemical component being a mixture of a polymer or copolymer with an alkali. This compound acts as a viscosity modifier and increases the green and cooked strength of the ceramic tiles.

The present invention relates to a raw material for ceramics which comprises an inorganic compound containing a mineral clay, water, and the following: potassium, sodium or ammonium polyacrylate, acrylic acid (AA) & methacrylic acid (MAA) copolymer, AA & maleic anhydride (MA) copolymer, and inorganic alkali compound.

### Description of the invention

This invention describes the manufacturing process and application of a clay dispersant compound.

The above compound is a blend of a water soluble polymer or copolymer (I) with an alkali (II), and mineral clay.

Examples of mineral clay are: Moró, Galve, Villar, Masvell, Spanish local names. Mineral clay having chemical composition described below are preferred:

| | | | |
|---|---|---|---|
| SiO2 | 30% - 75% | Al2O3 | 13% - 35% |
| Fe2O3 | 4% - 8% | CaO | 0,5% - 25% |
| MgO | 0,2% - 3% | Na2O | 0,1% -0,5% |
| K2O | 3% - 7% | TiO2 | 0,2% -1,5% |

The polymer or copolymer are based on the following monomers:
a).- Monocarboxylic monoethylene unsaturated acids and their salts (Na, K, NH4,..). With 3 to 10 C in the molecule, specially acrylic acid and methacrylic acid.
b).- Dicarboxylic monoethylene unsaturated acids, their salts (Na, K, NH4,..) and anhydrides, preferably the last ones. The appropriate dicarboxylic acids contains 4 - 6 carbon atoms. Example: maleic acid, itaconic acid, mesaconic acid, fumaric acid, methylenmalonic acid. Preferably maleic acid or maleic anhydride.

Total monomer content is around 15% - 45% in weight refering to final product with a solid content between 30% and 60%, preferably between 40% and 50%.

Water soluble initiators are used. Example: hydrogen peroxide (H2O2), sodium persulphate (NaPS), amonium persulphate (NH4PS). Initiator range amount goes from 1.5% to 20% over monomers weight content.

Polymerization should be done in aqueous media or in a mixture of alcoholic & aqueous solvent or in presence of chain transfer agent like 2-mercaptoethanol, n-Butyl mercaptan, preferably in alcoholic and aqueous solution. The content of the solvent is around 35% to 65% referring to reaction condition.

In the case of AA & MA copolymer, the molar ratio (AA/MA) range goes from 0.5 to 20, preferably from 4 to 10.

The polymerization process is carried out as follows: solvent (water or alcoholic & water) is charged, then monocarboxylic acid and initiator are added over the solvent solution, during 2 - 10 hours, preferably 3 - 4 hours. The temperature of polymerization goes from 70°C to 110°C. Then pH is adjusted according to the neutralization degree of the total monomer content. From 70 % to 100% of monomers are neutralized with different kinds of alkalis like sodium hydroxide, potassium hydroxide, ammonium hydroxide, preferably sodium hydroxide.

Molecular weight of the polymer, measured by GPC, goes from 1000 to 30000. Its viscosity, measured by Brookfield viscosimeter, goes from 150 cps to 2000 cps.
Process 1: for radical polymerization of acrylic acid in alcoholic solution. Charges:

| | | |
|---|---|---|
| X | 230 - 360 g | X=IPA (isopropyl alcohol), EtOH, etc. |
| H2O | 690 - 825 g | |
| AA | 280 - 310 g | |
| NaPS | 2,8 - 31 g | |
| NaOH | 110 - 175 g | |

Process 2: for radical polymerization of acrylic acid in aqueous solution. Charges:

| | |
|---|---|
| H2O | 480 - 550 g |
| AA | 280 - 320 g |
| NaPS | 0 - 15 g |
| H2O2 | 10 - 55 g |
| NaOH | 109 - 178 g |

Process 3: for radical copolymerization of acrylic acid and maleic anhydride in aqueous solution. Charges:

| | |
|---|---|
| H2O | 520 - 580 g |
| MA | 95 - 185 g |
| AA | 90 - 190 g |
| H2O2 | 5 - 30 g |
| NaOH | 90 - 258 g |

The chemical compound for ceramics is a mixture of the above described polymer or copolymer (I) with an alkali (II). Example of alkalis: sodium hydroxide, potassium hydroxide, sodium metasilicate, ammonium hydroxide, sodium carbonate, triethanolamine, diethanolamine, monoethanolamine, preferably sodium hydroxide, ammonium hydroxide, and sodium metasilicate. In order to improve the handling of the alkali agent, normally an alkali is used as an aqueous solution, especially NaOH (50%). The weight ratio of the mixture (I)/(II) goes from 95/5 to 20/80, preferably between 80/20 and 40/60. Dosage amount added of the mixture (I)/(II) goes from 0,05% to 5,00%, preferably from 0,1% to 3,0% over clay amount of the slurry.

The above mixture, (I) + (II), is added to the clay slurry before milling. In order to maximize dispersion and fluidity of the clay and permit mixing and pumping it.

The degree of dispersion which should be maximized during milling depends on the pH of the solution. The best range of pH goes from 9,2 to 10,3. This range avoids almost all the pH zpc (pH zero point of charge) of each inorganic clay's components (example: alumina, quartz,...). At this point, the surface of the mineral compound has no-charge, so the viscosity reaches a maximum.

The alkali (II) added gives a correct slurry's pH, then the dispersant, polymer (I), shows a better performance. In general, a slurry having more dispersed particles has a relatively lower viscosity than does one having less dispersed particles.

The chemical compound, (I) + (II), is added in order to increase the solid content in the slurry. As a consequence, we save energy at the atomization step, and the productivity of the atomizer is increased. With the powder product obtained after the atomization process, ceramic tiles may be produced with a higher mechanical resistence (green body & cooked body), around 15% - 30%, than tiles manufactured with inorganic standard dispersant, example mixture of sodium tripolyphosphate and sodium metasilicate.

The component for ceramics, (I) + (II), has a better performance than the actual standard dispersants, as example a mixture of sodium tripolyphosphate (STPP) and sodium metasilicate (SMS), that traditional ceramic tile industries are using. The component (I) + (II) is added with less than a half dosage, compared with the standard, this refers to the clay content of the slurry. Then a slurry is obtained with the same level of viscosity and residue, it is mesured as the porcentage of slurry's solids those remains in a sieve of 62 - 63µ. However, slurry's solid content is higher, around 1.5% - 5%, specially 2% - 3%, and reduces milling time necessary to reach the same level of residue as the inorganic standard dispersant.

### Example 1

A weight ratio Polymer(I) / NaOH(50%)(II) = 55 / 45 was used. Polymer (I) / (II) alkali aqueous solution dosage refers to clay amount of the slurry, in these cases 65%. The weight composition of the mixture (I) + (II) is:

| | |
|---|---|
| Polymer | 24,75% |
| NaOH | 22,50% |
| Water | 52,75% |

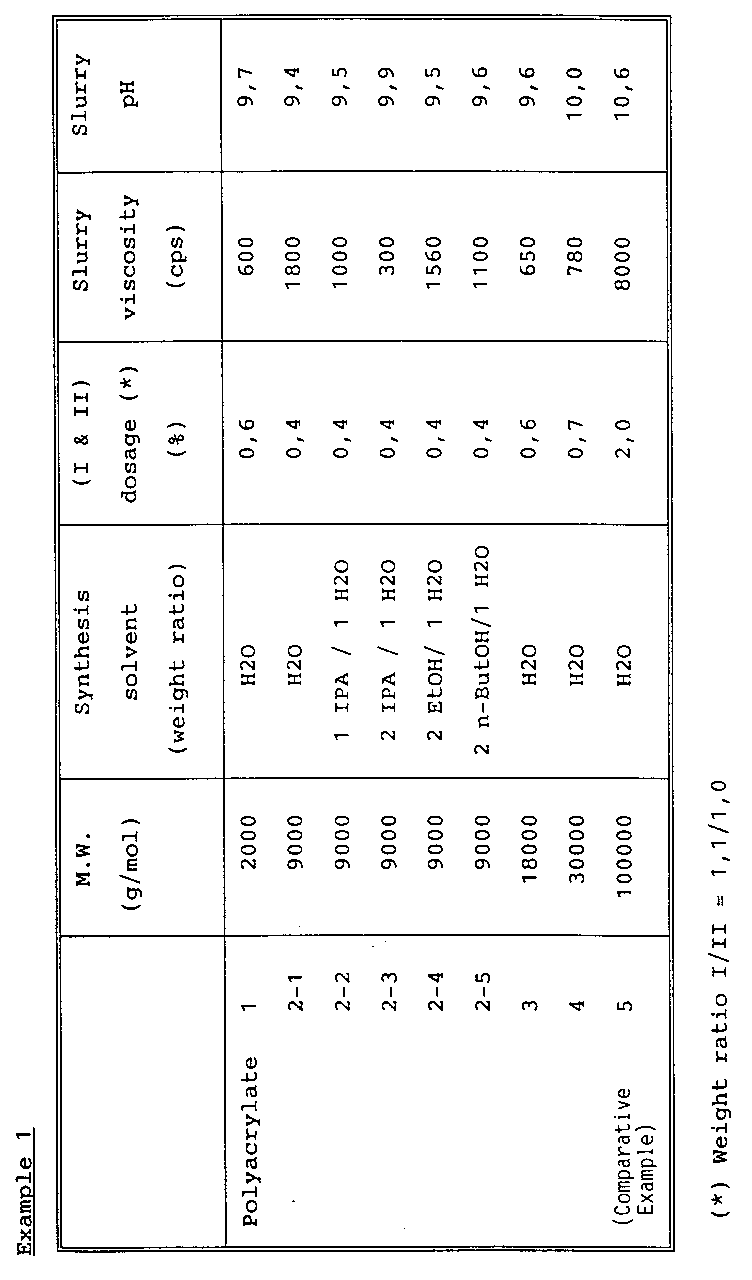

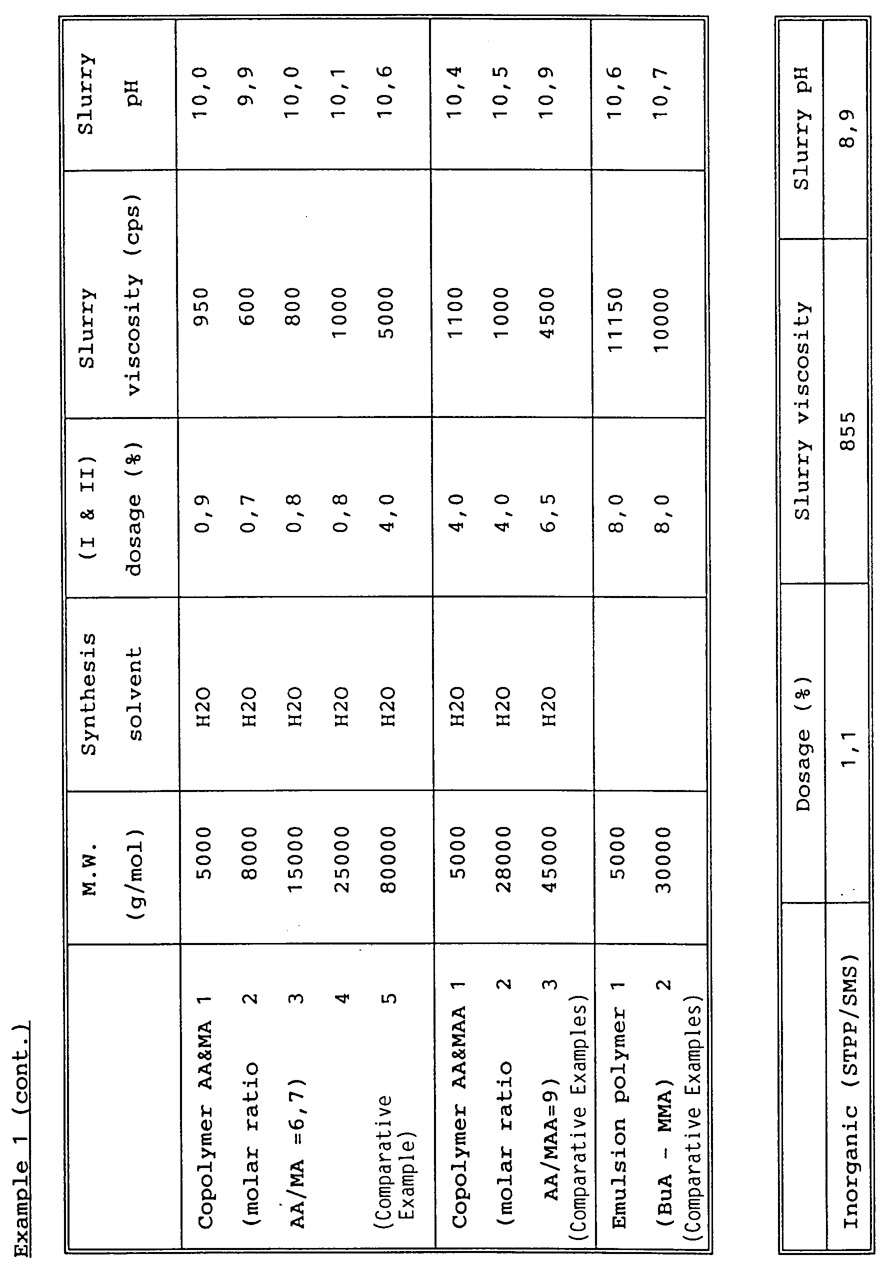

Slurries of example 1 are prepared using a ball mill with a capacity of 2 kg. Charges: 500 g clay, 270 g water and the dispersant amount for each case. After 8 minutes of milling, mill proces is stopped. Slurry is cooling down at room temperature. Then they are mesured viscosity with Brookfield viscosimeter, and pH.

According to data from example 1, the polymer with better performance (measure of slurry's viscosity) is a polyacrylate with a molecular weight range from 1000 to 30000, preferably from 5000 to 15000.

A AA & MA copolymer, with a low molecular weight (18000) and with a molar ratio AA/MA = 4 - 10 has an acceptable performance.

An emulsion polymer has a bad performance. It presents a slurry with a high viscosity and at the same time it uses a high amount of polymer.

Testing several polyacrylates with the same M.W., around 9000, but obtained trough a different solvent media. As a consequence of data from example 1, polyacrylates polymerized in a mixture of alcoholic & aqueous media, especially IPA/Water with a weight ratio range from 1/1 to 2/1 and n-ButOH/Water (2/1), have better performance with the lowest dispersant dosage.

The standard inorganic dispersant, a mixture of sodium tripolyphosphate (STPP) and sodium metasilicate (SMS), presents a worse performance than the chemical compound ((I) + (II)), eventhough, it uses a higher dosage.

### Example 2

In order to maximize the dispersion of clay particles inside of the slurry, and get a lower viscosity of the slurry (less than 1000 cps), this has to reach a level of pH that goes from 9,2 to 10,3. This range avoids pHzpc of different inorganic clay components. So, an alkali (II) should be added with the polymer (I), and mixture (I) + (II) reaches the correct level of pH.

Slurries from example 2 were prepared in the same way as example 1. The polymer used was a sodium polyacrylate with a molecular weight around 9000 g/mol.

Several alkalis, and different amounts were tested in example 2.

| Alkali agents: | | | | |
|---|---|---|---|---|
| | Weight ratio | (%) Dosage (polymer+ alkali) | Slurry pH | Slurry viscosity (cps) |
| Polymer | 50% | 0,4 | 9,7 | 220 |
| NaOH (50%) | 50% | | | |
| Polymer | 25% | 0,4 | 9,3 | 600 |
| NH4OH (25%) | 75% | | | |
| Polymer | 75% | 0,4 | 9,0 | 855 |
| SMS | 25% | | | |
| Polymer | 75% | 0,4 | 8,9 | 1105 |
| Na2CO3 | 25% | | | |

| Alkali amount (NaOH(50%)): | | | |
|---|---|---|---|
| (%) Polymer | (%)NaOH(50%) | Slurry pH | Slurry viscosity (cps) |
| 0,3 % | 0,0 | 8,0 | 2500 |
| | 0,10 | 8,7 | 1300 |
| | 0,25 | 9,3 | 400 |
| | 0,30 | 9,7 | 357 |
| | 0,35 | 10,3 | 490 |
| | 0,40 | 11,0 | 850 |
| | 0,45 | 11,3 | 2000 |

### Example 3

The slurry preparation process of the example 3 is the same as described in example 1. Viscosity, residue, and solid content of the slurry are measured. Atomization is the following step, at the end of it a powder product with a moisture degree from 4% to 7%, and an average particle size from 150µ to 600µ is obtained. Then press moulding and drying processes are carried out. The standard pressure that it is applied over the mould, is around 250 kg/cm2. The ceramic tile is dried at this point of the process and its green mechanical resistence is evaluated. The ceramic piece undergoes an enamel and cooking process. After cooking the mechanical resistence, and shrinkage are measured.

The standard dispersant used was a mixture of sodium tripolyphosphate and sodium metasilicate with a weight ratio 1/5 respectively.

A ball mill was charged with the following components:

| | Batch 1 | Batch 2 |
|---|---|---|
| Clay (Kg) | 13.950 | 14.485 |
| Water (Kg) | 7.350 | 6.815 |
| STD (1STPP/5SMS) | 167 | ----- |
| (I)+(II) | ---- | 65 |
| Milling time (h) | 4 | 3 |
| Viscosity (cps) | 560 | 580 |
| Residue (62µ) | 11,5 | 11,8 |
| Solid content (%) | 65,5 | 68,0 |
| Green Mechanical Resistence (kg/cm2) | 16,8 | 20,0 |
| Cooked mechanical resistence (kg/cm2) | 174,0 | 228,0 |
| Shrinkage (%) | 1,27 | 0,89 |

Slurries were obtained with following results:

Component for ceramics (I) + (II) reached the same results (level of viscosity, residue) as the standard dispersant, but with 25% less milling time and a dosage of 37,5%, refering to the standard dosage.

Ceramic tiles made from atomized powder treated with the component (I) + (II) had a better mechanical resistence in green and in cooked, and lower shrinkage after sintering, than other tiles obtained with powder treated with the standard dispersant.

Ceramic tiles prepared with clay powder obtained from slurries of example 4. Ceramic tiles' size was 450 x 250 mm. They had the following physical properties:

The component for ceramics (I) + (II) improved the green and cooked mechanical resistence 19% and 31% respectively. Tiles manufactured from powder treated with the component (I) + (II) had less shrinkage than the standard one.

To better understand the invention Figure 1 is attached showing a flow chart of the production process of this invention.

According to figure 1, the first step -1- consists in the blend of different types of clays -2-, then a milling and mixing step -3- for the preparation of the slurry -4-. In stage -3- a chemical compound -4- is added to obtain dispersion ability, water -5- is also added.

At the following atomization step -6- a powder is obtained with a specific particle size distribution. Then the press moulding process -7- gives the final shape and size to the ceramic tile.

Before the enamel and serigraphy process is carried out, a drying step -8- will eliminate the moisture of the green ceramic body. Then, colour and decorative coatings are applied in the following step -9- on the surface of the ceramic tile. The production process is complete after a cooking or firing step -10-.

## Claims

1. An aqueous slurry composition for ceramics which comprises:
a.- From 50% to 80% of mineral clay;
b.- From 0,02% to 2,75% by weight of a water soluble acrylic polymer selected from the group consisting of (i) - (iii):
i.- Potassium, sodium, or ammonium polyacrylate having molecular weight from 2000 to 30000;
ii.- Potassium, sodium, or ammonium salt of copolymer of acrylic acid and methacrylic acid having molecular weight from 8000 to 30000;
iii.- Potassium, sodium, or ammonium salt of copolymer of acrylic acid and maleic acid having molecular weight from 5000 to 25000;
c.- From 0,01% to 2,25% by weight of inorganic alkali compound;
d.- From 20% to 50% of water; and
which has a pH value of 9.2 to 10.3 and a viscosity of ≤ 1800 cps.

2. An aqueous slurry composition as claimed in claim 1, wherein (c) inorganic alkali compound is selected from the group consisting of NaOH, KOH, and sodium metasilicate.

3. An aqueous slurry composition as claimed in claim 1, wherein the weight ratio of (b) water soluble acrylic polymer and (c) inorganic alkali compound is from 95/5 to 20/80.

4. An aqueous slurry composition as claimed in claim 1, wherein the weight ratio of (b) water soluble acrylic polymer and (c) inorganic alkali compound is from 80/20 to 40/60.

5. An aqueous slurry composition as claimed in claim 1, wherein compound (b) (water soluble acrylic polymer) is produced by polymerization using alcohol-water solvent.

6. An aqueous slurry composition as claimed in claim 1, wherein the total amount of (b) and (c) is 0,05 to 5,00 weight % relative to mineral clay.

7. An aqueous slurry composition as claimed in claim 1, wherein the total amount of (b) and (c) is 0,15 to 2,3 weight % relative to mineral clay.

8. An aqueous slurry composition as claimed in claim 1, wherein the mineral clay has the following composition:
...SiO₂ 30-75%
...Al₂O₃ 13-35%
...Fe₂O₃ 4-8%
...CaO 0.5-25%
...MgO 0.2-3%
...Na₂O 0.1-0.5%
...K₂O 3-7%,
...TiO₂ 0.2-1.5%.

9. Method for producing a raw material for ceramics which comprises:
i.- producing an aqueous slurry composition as claimed in any of the claims 1-8;
ii.- atomizing the composition resulting from step (i) to produce a powder composition.

10. A green body for ceramics obtained by molding the powder composition resulting from atomizing an aqueous slurry composition as claimed in claim 8.

11. Ceramic tiles which are obtained by cooking green bodies as claimed in claim 10.

## Patentansprüche

1. Wäßrige Aufschlämmungszusammensetzung für Keramiken, umfassend:
a) von 50 bis 80% Minerallehm;
b) von 0,02 bis 2,75 Gew.% eines wasserlöslichen Acrylpolymers, ausgewählt aus der Gruppe, bestehend aus (i) bis (iii):
(i) Kalium-, Natrium- oder Ammoniumpolyacrylat mit einem Molekulargewicht von 2000 bis 30000;
(ii) Kalium-, Natrium- oder Ammoniumsalz eines Copolymers von Acrylsäure und Methacrylsäure mit einem Molekulargewicht von 8000 bis 30000;
(iii) Kalium-, Natrium- oder Ammoniumsalz eines Copolymers aus Acrylsäure und Maleinsäure mit einem Molekulargewicht von 5000 bis 25000;
c) von 0,01 bis 2,25 Gew.% einer anorganischen Alkaliverbindung;
d) von 20 bis 50% Wasser; und
die einen pH-Wert von 9,2 bis 10,3 und eine Viskosität von ≤ 1800 cps hat.

2. Wäßrige Aufschlämmungszusammensetzung nach Anspruch 1, worin (c) die anorganische Alkaliverbindung ausgewählt ist aus der Gruppe, bestehend aus NaOH, KOH und Natriummetasilicat.

3. Wäßrige Aufschlämmungszusammensetzung nach Anspruch 1, worin das Gewichtsverhältnis des (b) wasserlöslichen Acrylpolymers und der (c) anorganischen Alkaliverbindung 95/5 bis 20/80 ist.

4. Wäßrige Aufschlämmungszusammensetzung nach Anspruch 1, worin das Gewichtsverhältnis des (b) wasserlöslichen Acrylpolymers und der (c) anorganischen Alkaliverbindung von 80/20 bis 40/60 ist.

5. Wäßrige Aufschlämmungszusammensetzung nach Anspruch 1, worin die Verbindung (b) (wasserlösliches Acrylpolymer) durch Polymerisation unter Verwendung eines Alkohol-Wasser-Lösungsmittels hergestellt ist.

6. Wäßrige Aufschlämmungszusammensetzung nach Anspruch 1, worin die Gesamtmenge von (b) und (c) 0,05 bis 5,00 Gew.%, bezogen auf den Minerallehm, ist.

7. Wäßrige Aufschlämmungszusammensetzung nach Anspruch 1, worin die Gesamtmenge von (b) und (c) 0,15 bis 2,3 Gew.%, bezogen auf Minerallehm, ist.

8. Wäßrige Aufschlämmungszusammensetzung nach Anspruch 1, worin der Minerallehm die folgende Zusammensetzung hat:
SiO₂ 30-75%
Al₂O₃ 13-35%
Fe₂O₃ 4-8%
CaO 0,5-25%
MgO 0,2-3%
Na₂O 0,1-0,5%
K₂O 3-7%
TiO₂ 0,2-1,5%

9. Verfahren zur Erzeugung eines Ausgangsmaterials für Keramiken, umfassend:
(i) Herstellung einer wäßrigen Aufschlämmungszusammensetzung wie in einem der Ansprüche 1 bis 8 beansprucht;
(ii) Atomisieren der Zusammensetzung, die von Schritt
(i) resultiert, unter Herstellung einer Pulverzusammensetzung.

10. Grünkörper für Keramiken, erhalten durch Formen der Pulverzusammensetzung, die von dem Atomisieren einer wäßrigen Aufschlämmungszusammensetzung wie in Anspruch 8 beansprucht resultiert.

11. Keramikplatten, erhalten durch Kochen von Grünkörpern, wie in Anspruch 10 beansprucht.

## Revendications

1. Composition de pâte aqueuse épaisse pour céramiques qui comprend
a. - de 50 % à 80 % d'argile minérale;
b. - de 0,02 % à 2,75 % en poids d'un polymère acrylique hydrosoluble choisi dans le groupe constitué par (i) - (iii) :
i. - un polyacrylate de potassium, sodium ou ammonium ayant en poids moléculaire de 2000 à 30000 ;
ii. - un sel de potassium, sodium ou ammonium d'un copolymère de l'acide acrylique et de l'acide méthacrylique, ayant un poids moléculaire de 8000 à 30000 ;
iii. - un sel de potassium, sodium ou ammonium d'un copolymère de l'acide acrylique et de l'acide maléique, ayant un poids moléculaire de 5000 à 25000 ;
c. de 0,01 % à 2,25 % en poids d'un composé alcalin inorganique ;
d. - de 20 % à 50 % d'eau ; et
qui a une valeur de pH de 9,2 à 10,3 et une viscosité ≤ 1800 cps.

2. Composition de pâte aqueuse épaisse selon la revendication 1, dans laquelle alcalin inorganique (c) est choisi dans le groupe constitué par NaOH, KOH et le métasilicate de sodium.

3. Composition de pâte aqueuse épaisse selon la revendication 1, dans laquelle le rapport pondéral du polymère acrylique hydrosoluble (b) sur le composé alcalin inorganique (c) est de 95/5 à 20/80.

4. Composition de pâte aqueuse épaisse selon la revendication 1, dans laquelle le rapport pondéral du polymère acrylique hydrosoluble (b) sur le composé alcalin inorganique (c) est de 80/20 à 40/60.

5. Composition de pâte aqueuse épaisse selon la revendication 1, dans laquelle le composé (b) (polymère acrylique hydrosoluble) est produit par polymérisation, en utilisant un solvant alcool - eau.

6. Composition de pâte aqueuse épaisse selon la revendication 1, dans laquelle la quantité totale de (b) et de (c) est de 0,05 à 5,00 % en poids de l'argile minérale.

7. Composition de pâte aqueuse épaisse selon la revendication 1, dans laquelle la quantité totale de (b) et de (c) est de 0,15 à 2,3 % en poids de l'argile minérale.

8. Composition de pâte aqueuse épaisse selon la revendication 1, dans laquelle l'argile minérale a la composition suivante :
... SiO₂ 30 - 75 %
... Al₂O₃ 13 - 35 %
... Fe₂O₃ 4 - 8 %
... CaO 0,5 - 25 %
... MgO 0,2 - 3 %
... Na₂O 0,1 - 0,5 %
... K₂O 3 - 7 %
... TiO₂ 0,2 - 1,5 %

9. Procédé pour produire une matière première pour céramiques, qui comprend les étapes consistant à :
i. - produire une composition de pâte aqueuse épaisse selon l'une quelconque des revendication 1 à 8 ;
ii. - atomiser la composition obtenue à l'étape (i), pour produire une composition pulvérulente.

10. Corps cru pour céramiques obtenu en moulant la composition de poudre résultant de l'atomisation d'une composition de pâte aqueuse épaisse selon la revendication 8.

11. Carreaux en céramique qui ont été obtenus par la cuisson de corps crus selon la revendication 10.
